Europäisches Patentamt

European Patent Office

Office européen des brevets

(19)

(11) Veröffentlichungsnummer: **0 298 966**
**B1**

(12) EUROPÄISCHE PATENTSCHRIFT

(45) Veröffentlichungstag der Patentschrift: 01.08.90

(21) Anmeldenummer: 87901377.9

(22) Anmeldetag: 05.03.87

(86) Internationale Anmeldenummer:
PCT/DE87/00093

(87) Internationale Veröffentlichungsnummer:
WO 87/05997 08.10.87 Gazette 87/22

(51) Int. Cl.⁵: **G 01 L 9/04**, G 01 L 9/06,
G 01 L 9/08

(54) DRUCKSENSOR.

(30) Priorität: 27.03.86 DE 3610351

(43) Veröffentlichungstag der Anmeldung:
18.01.89 Patentblatt 89/03

(45) Bekanntmachung des Hinweises auf die
Patenterteilung:
01.08.90 Patentblatt 90/31

(84) Benannte Vertragsstaaten:
AT DE FR GB IT

(56) Entgegenhaltungen:
EP-A-0 179 278
DE-A-2 110 522
DE-A-3 026 617
FR-A-1 602 328
US-A-4 012 940
US-A-4 369 659

(73) Patentinhaber: ROBERT BOSCH GMBH
Postfach 10 60 50
D-7000 Stuttgart 10 (DE)

(72) Erfinder: DOBLER, Klaus
Bettäckerstr. 12
D-7016 Gerlingen (DE)
Erfinder: WENDEL, Jürgen
Germersheimer Str. 14
D-7000 Stuttgart 31 (DE)

**Beschreibung**

Die Erfindung betrifft einen Drucksensor, Bei einem derartigen aus der nachveröffentlichten EP—A—0 179 278 bekannten Drucksensor wird das druckempfindliche Element in eine Sacklochbohrung eingesetzt und von einem Halteteil gegen den Boden der Sacklochbohrung gedrückt. Hier für ist ein relativ großer Bohrungsdurchmesser notwendig, um das druckempfindliche Element einsetzen zu können. Dadurch wird die Festigkeit des Drucksensors verringert. Insbesondere bei einem längeren Einsatz dieses Sensors und bei extrem hohen Drücken kann die Festigkeit der Wandung des Drucksensors nicht ausreichen. Die Nennung von EP—A—0 179 278 erfolgt unter Art.54 (3,4) E.P.Ü.

In der DE—A1—3 026 617 wird die Ausnehmung für das Meßelement von einer in Richtung zum Meßelement hin beweglichen Membran abgeschlossen. Durch eine kraftschlüssige Übertragung der druckbedingten Membranbewegung auf das Meßelement wird ein Meßsignal hervorgerufen. Als meßelement wird hierbei ein piezo-elektrisches Element verwendet. Die schwin-gungsfähige Membran selbst weist einen verstärkten Mittelteil und dünne, biegbare Außenbereiche auf, die notwendig sind, um eine durchbiegbare Membran zu erhalten. Ein die Bohrung völlig abschließendes weitgehend mechanisch festes Schlußteil kann hier nicht verwendet werden.

Auch in der US—A—4 012 940 besteht das Meßelement aus Piezokristallen, deren Wirkungsweise auf Dickenänderungen beruht. Der herrschende Druck wird über eine elastische Kappe, die das Gehäuse abschließt, auf das Meßelement übertragen. Für die Funktion des Druckübertragers muß die Membran elastisch ausgebildet sein und möglichst direkt dem herrschenden Druck ausgesetzt sein. Temperatur- und sonstige Umwelteinflüsse können dabei stark die Meßwerte verfälschen.

Vorteile der Erfindung

Der erfindungsgemäße Sensor mit den kennzeichnenden Merkmalen des Anspruchs 1 hat demgegenüber den Vorteil, daß er einen geringen Bohrungsdurchmesser aufweist; er ist nur auf die Dicke der elektrischen Leitungen abzustimmen. Das druckempfindliche Element wird von der Seite des Druckmediums her in eine Ausnehmung des Trägers eingeschoben, so daß nur im Bereich des druckempfindlichen Elements ein größerer Bohrungsdurchmesser notwendig ist. Da die Bohrung durch ein Verschlußteil, an das das druckempfindliche Element anliegt, abgeschlossen ist, ist eine gute Druckübertragung vom Druckmedium auf das druckempfindliche Element gewährleistet. Gleichzeitig ist das druckempfindliche Element wie bei einer Anordnung in einer Sacklochbohrung vom Druckmedium getrennt. Die Festigkeit des Drucksensors wird sehr verbessert.

Durch die in den abhängigen Patentansprüchen aufgeführten Maßnahmen sind vorteilhafte Weiterbildungen des im Patentanspruch 1 angegebenen Drucksensors möglich. Insbesondere können auch in einfacher Weise Leiterbahnen auf einem Träger aufgedruckt werden und so die jeweiligen Meßsignale vom druckempfindlichen Element abgeleitet werden.

Zeichnung

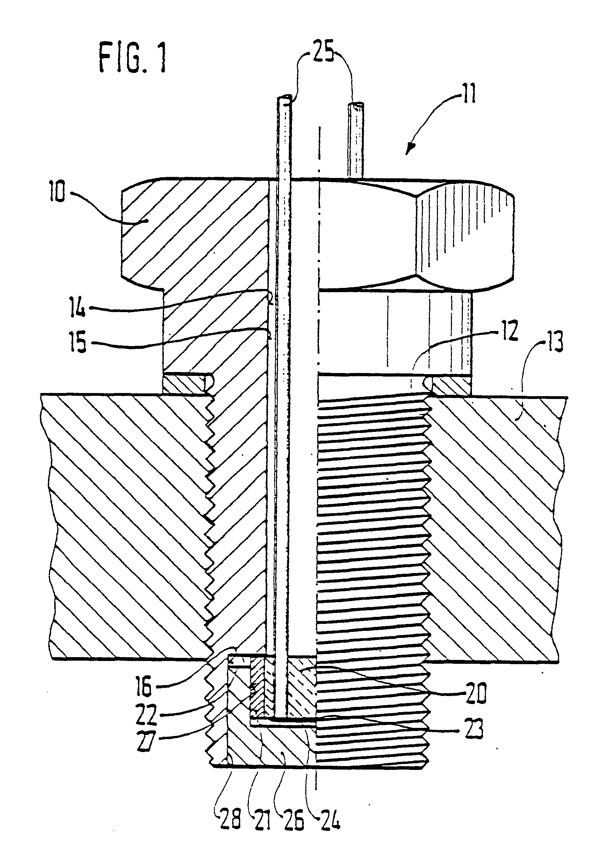

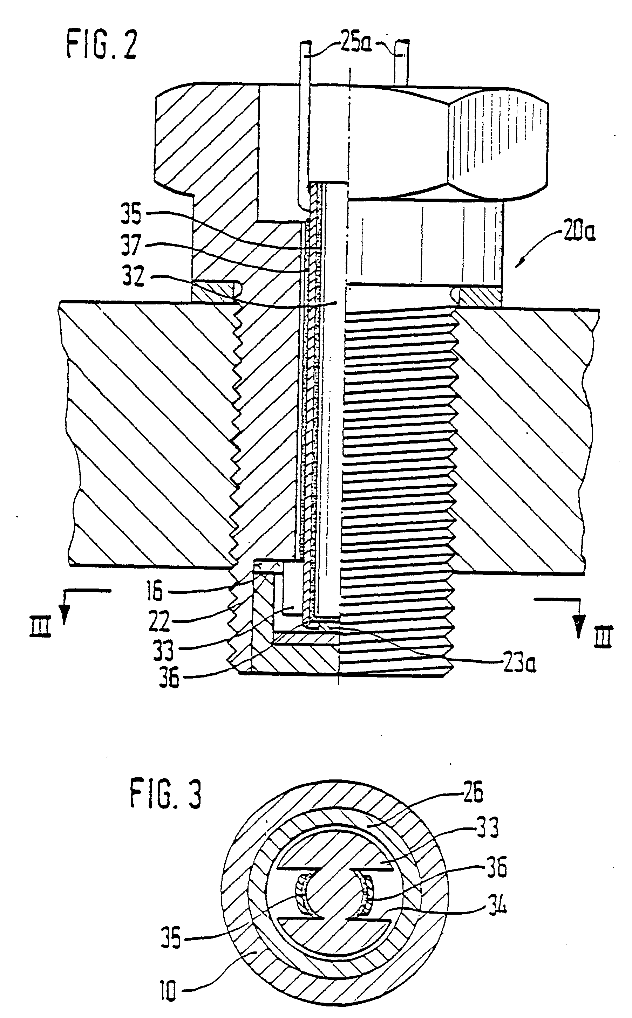

Ausführungsbeispiele der Erfindung sind in der Zeichnung dargestellt und in der nachfolgenden Beschreibung näher erläutert. Es zeigen Figur 1 zur Hälfte im Schnitt den das druckempfindliche Element lagernden Träger, der in eine das Druckmedium aufnehmende Wandung eingesetzt ist, Figur 2 eine Abwandlung des Ausführungsbeispiels nach Figur 1 und Figur 3 einen Schnitt in Richtung III—III nach Figur 2.

Beschreibung des Ausführungsbeispiels

In Figur 1 ist mis 10 das Gehäuse eines Drucksensors 11 bezeichnet, das als Schraube oder in Schraubenform ausgebildet ist. Das Gehäuse 10 ist in eine Bohrung 12 der Wandung 13 eines Druckbehälters eingesetzt und kann über die Wandung 13 hinaus in das Druckmedium hineinragen, dessen Druck bzw. Druckvariation gemessen werden soll. Das Gehäuse 10 weist eine etwa mittige, durchgehende, abgesetzte Längsbohrung 14 mit den Abschnitten 15 und 16 auf. Der Abschnitt 16 mit dem größeren Durchmesser ist dem Innenraum des Druckbehälters, d.h. dem Druckmedium, zugewandt.

Im Abschnitt 16 der Längsbohrung 14 befindet sich ein Isolationsteil 20 (z.B. Glas), das von einem Metallring 21 umgeben ist. Der Metallring 21 liegt an der zwischen den Abschnitten 15, 16 der Längsbohrung 14 gebildeten Schulter 22 an und weist einen radialen Abstand zur Wandung des Abschnittes 16 auf. Auf der dem Druckmedium zugewandten Stirnseite des Isolationsteils 20 ist ein druckempfindliches Element 23 angeordnet, an das sich eine Scheibe 24 anschließt. Die Scheibe 24 besteht aus elastischem, druckübertragendem Material und schließt an ihrem Außenumfang bündig mit dem Metallring 21 ab. Vom druckempfindlichen Element 23 führen durch das Isolationsteil 20 und die Längsbohrung 14 elektrische Anschlüsse 25 nach außen. Die Längsbohrung 14 ist von der Seite des Druckmediums her von einem becherförmigen Verschlußteil 26 abgeschlossen. In der Ausnehmung 27 des Verschlußteils 26 befinden sich der Metallring 21 und die Scheibe 24. Das Verschlußteil 26 ist mit Preßsitz in den Abschnitt 16 der Längsbohrung 14 eingesetzt. Es ist aber auch denkbar, das Verschlußteil 26 in den Abschnitt 16 einzuschrauben. In beiden Fällen soll das Verschlußteil 26 bündig mit dem Gehäuse 10 abschließen. Gleichzeitig ist es notwendig, daß die Scheibe 24 am Boden des Verschlußteils 26 anliegt und der Metallring 21 gegen die Schulter 22, die als Gegenkraft dient, gedrückt wird. So ist eine Druckübertragung auf das druckempfindliche Element 23 möglich. Zur zusätzlichen Sicherung und Abdichtung kann das Verschlußteil 26 entlang der Trennfuge 28 zwischen dem Abschnitt 16 und dem Verschlußteil 26 verschweißt oder verklebt werden. Nach Einsetzen des Verschlußteils 26 entsteht somit wieder Sacklochbohrung mit den bekannten Vorzügen aber mit stark verringertem Durchmesser im oberen Bereich.

Bei der Herstellung des Drucksensors 11 wird zuerst das Isolationsteil 20 mit Metallring 21, druckempfindlichem Element 23 und der Scheibe 24 in die Längsbohrung 14 von der Seite des Druckmediums her eingeschoben. Dadurch braucht die Längsbohrung 14 im Abschnitt 15 nur den Durchmesser der beiden elektrischen Leitungen 25 aufzuweisen. Anschließend wird das Verschlußteil 26 soweit in den Abschnitt 16 eingepreßt, bis die Scheibe 24 am Boden des Verschlußteils 26 und der Metallring 21 gleichzeitig an der Schulter 22 anliegt. Das druckempfindliche Element 23 ist somit auch an den Boden des Verschlußteils 26 angedrückt. Die Trennfuge 28 kann nun verschweißt werden. Um einen bündigen Abschluß zwischen dem Gehäuse 10 und dem Verschlußteil 26 zu erhalten, kann die dem Druckmedium zugewandte Stirnseite des Gehäuses 10 abgeschliffen bzw. poliert werden. Dadurch bildet die Längsbohrung 14 eine Sackbohrung. Zusätzlich ergeben sich aber noch die Vorteile, daß nur ein den Leitungen 25 angepaßter Durchmesser der Längsbohrung 14 notwendig ist und somit die Festigkeit des Drucksensors im Einschraubbereich wesentlich verbessert wird.

Im Ausführungsbeispiel nach Figur 2 ist eine Ausbildung des Drucksensors 20a mit Leiterbahnen dargestellt. Entsprechende Bauteile wie zuvor sind wieder mit gleichen Ziffern bezeichnet. In der Längsbohrung 14 ist ein metallischer Träger 32 eingesetzt, der im Bereich des Abschnittes 16 einen Abschnitt 33 mit größerem Durchmesser aufweist und mit diesem an der Schulter 22 anliegt. Ferner sind im Träger 32 — wie aus Figur 3 näher ersichtlich — zwei parallel zur Längsachse verlaufende Längsnuten 34 ausgebildet. In den Längsnuten 34 und auf der Stirnseite ist auf dem Träger 32 eine Isolierschicht 35, z.B. aus Glas, aufgebracht. Auf die Isolierschicht 35 sind Leiterbahnen 36 und auf der Stirnseite ein druckempfindliches Element 23a aufgedruckt. Dieses kann sowohl in Dünnschicht- als auch in Dickschichttechnik ausgeführt sein und z.B. nach dem piezoresistiven oder piezoelektrischen Effekt arbeiten. Im Bereich des Abschnittes 15 der Längsbohrung 14 sind die Leiterbahnen 36 zusätzlich durch eine Isolierschicht 37 oder durch einen Isolierschlauch abgedeckt, um so eine Berührung mit dem Gehäuse 10 zu verhindern. Von den Leiterbahnen 36 führen elektrische Leitungen 25a zu einer nicht dargestellten Auswerteschaltung. Selbstverständlich können die Leitungen 25a aber auch bereits im Bereich des Abschnittes 16 an den Leiterbahnen 36 angeordnet sein, so daß dann keine zusätzliche Isolierschicht 37 notwendig wäre.

Die Herstellungsfolge ist entsprechend dem Ausführungsbeispiel nach Figur 1.

Der Drucksensor 11 läßt sich mit Vorzug bei der Druckmessung in Verteilerpumpen von Kraftstoffeinspritzsystemen sowie bei der Verbrennungsdruckmessung in Diesel- oder Ottomotoren einsetzen.

**Patentansprüche**

1. Drucksensor, insbesondere zur Erfassung des Drucks eines von einer Wandung begrenzten Mediums, mit einem druckempfindlichen Schichtwiderstand (23, 23a), einem Dickschicht- oder Dünnschichtwiderstand, welcher unter Druckeinwirkung seine elektrischen Eigenschaften ändert, ferner mit einem Träger, der den druckempfindlichen Schichtwiderstand (23) und dessen elektrische Zuleitungen lagert und einen durch eine durchgehende Bohrung gebildeten Hohlraum (14), der von einem zusätzlichen, einsetzbaren Verschlußteil (25) gegenüber dem Medium, dessen Druck bestimmt werden soll, abgeschlossen ist, und wobei das Verschlußteil (26) mit seiner Innenseite so am Schichtwiderstand (23) anliegt, daß an diesem eine mechanische Vorspannung erzeugt wird.

2. Drucksensor nach Anspruch 1, dadurch gekennzeichnet, daß das Verschlußteil (26) mechanisch fest mit der Wandung der Bohrung (14) verbunden ist.

3. Drucksensor nach Anspruch 1 oder 2, dadurch gekennzeichnet, daß das Verschlußteil (26) in die Bohrung (14) eingeschraubt ist.

4. Drucksensor nach Anspruch 1 oder 2, dadurch gekennzeichnet, daß das Verschlußteil (26) durch Preßsitz in die Bohrung (14) eingesetzt ist.

5. Drucksensor nach einem der Ansprüche 1 bis 4, dadurch gekennzeichnet, daß die Trennfuge (28) zwischen der Bohrung (14) und dem Verschlußteil (26) verschweißt oder verklebt ist.

6. Drucksensor nach einem der Ansprüche 1 bis 5, dadurch gekennzeichnet, daß die Bohrung (14) einen ersten Abschnitt (16) mit größerem Durchmesser aufweist, in dem das druckempfindliche Element (23, 23a) angeordnet und in den das Verschlußteil (26) eingesetzt ist, und daß die Bohrung (14) einen zweiten Abschnitt (15) aufweist, dessen Durchmesser etwa dem der elektrischen Leitungen (25) für das druckempfindliche Element (23) entspricht.

7. Drucksensor nach einem der Ansprüche 1 bis 6, dadurch gekennzeichnet, daß in die Bohrung (14) ein Träger (32) eingesetzt ist, der einen Abschnitt (33) mit größerem Durchmesser hat und auf dem auf einer Isolierschicht (35) Leiterbahnen (36) und das druckempfindliche Element (23, 23a) aufgedruckt oder aufgedampft sind.

**Revendications**

1. Capteur de pression notamment pour détecter la pression d'un fluide délimité par une paroi, et comportant une résistance en couche (23a) sensible à la pression, une résistance en couche mince ou couche épaisse dont les propriétés électriques changent sous l'effet d'une pression, ainsi qu'un support qui reçoit la résistance en couche (23), sensible à la pression et ses lignes de liaison électriques et un perçage traversant formant une cavité (14) qui est fermée par une pièce d'obturation (26), complémentaire, mise en place en passant par le côté de fluide dont on veut déterminer la pression, et dont la face intérieure est appliquée contre la résistance en couche (23) pour y créer une précontrainte mécanique.

2. Capteur de pression selon la revendication 1, caractérisé en ce que la pièce d'obturation (26) est reliée solidairement à la paroi du perçage (14) par un moyen mécanique.

3. Capteur de pression selon la revendication 1 ou 2, caractérisé en ce que la pièce d'obturation (26) est vissée dans le perçage (14).

4. Capteur de pression selon la revendication 1 ou 2, caractérisé en ce que la pièce d'obturation (26) est placée dans le perçage (14) par un ajustement pressé.

5. Capteur de pression selon l'une des revendications 1 à 4, caractérisé en ce que la ligne de joint (28) entre le perçage (14) et sa pièce d'obturation (26) est soudée ou collée.

6. Capteur de pression selon l'une des revendications 1 à 5, caractérisé en ce que le perçage (14) comporte un premier segment (16) de plus grand diamètre qui reçoit l'élément sensible à la pression (23, 23a) et est placé dans la pièce d'obturation (26) et en ce que le perçage (14) présente un second segment (15) dont le diamètre correspond sensiblement aux lignes électriques (25) de l'élément sensible à la pression (23).

7. Capteur de pression selon l'une des revendications 1 à 6, caractérisé en ce que le perçage (14) reçoit un support (32) ayant un segment (33) de plus grand diamètre et sur lequel sont mis en place ou déposés à la vapeur des chemins conducteurs (36) sur une couche isolante (35) et l'élément sensible à la pression (23, 23a).

**Claims**

1. Pressure sensor, particularly for determining the pressure of a medium bounded by a wall, having a pressure-sensitive layer resistance (23, 23a), a thick-layer or thin-layer resistance, which changes its electrical properties under the action of pressure, also having a carrier, which supports the pressure-sensitive layer resistance (23) and its electrical leads and a hollow space (14) formed by a through hole, which hollow space is closed off, by an additional, insertable closure part (26), against the medium whose pressure is to be determined and the closure part (26) being in contact, by means of its inner end, with the layer resistance (23) in such a way that a mechanical prestress is generated in the latter.

2. Pressure sensor according to Claim 1, characterized in that the closure part (26) is mechanically solidly connected to the wall of the hole (14).

3. Pressure sensor according to Claim 1 or 2, characterized in that the closure part (26) is screwed into the hole (14).

4. Pressure sensor according to Claim 1 or 2, characterized in that the closure part (26) is inserted by means of a press fit in the hole (14).

5. Pressure sensor according to one of Claims 1 to 4, characterized in that the joint (28) between the hole (14) and the closure part (26) is welded or adhesively bonded.

6. Pressure sensor according to one of Claims 1 to 5, characterized in that the hole (14) has a larger diameter first section (16) in which the pressure-sensitive element (23, 23a) is arranged and into which the closure part (26) is inserted, and that the hole (14) has a second section (15) whose diameter corresponds approximately to that of the electrical leads (25) for the pressure-sensitive element (23).

7. Pressure sensor according to one of Claims 1 to 6, characterized in that a carrier (32) is inserted into the hole (14), which carrier (32) has a larger diameter section (33) and on which carrier, strip conductors (36) and the pressure-sensitive element (23, 23a) are printed or sputtered on an insulating layer (35).

FIG. 1

FIG. 2

FIG. 3